# EUROPÄISCHE PATENTANMELDUNG

(11) **EP 1 304 896 A2**
(43) Veröffentlichungstag der Anmeldung: **23.04.2003**
(21) Anmeldenummer: 02022354.1
(22) Anmeldetag: 08.10.2002
(51) Int. Cl.: H04Q 7/36

(54) **Verfahren zum Einmessen eines Funkfeldes bei einem Mehrzellen-Funksystem sowie Steuereinheit**

(30) Priorität: 08.10.2001 DE 10149571
(71) Anmelder: Tenovis GmbH & Co. KG, 60326 Frankfurt am Main (DE)
(72) Erfinder: Rommel, Joachim, 64546 Mörfelden-Walldorf (DE); Ness, Reto, 65817 Eppstein/Taunus (DE); Kammoun, Khalil, 60325 Frankfurt a. M. (DE)
(74) Vertreter: Patentanwaltskanzlei WILHELM & BECK

(57) **Zusammenfassung**

Bisher ist es üblich, dass bei einem Mehrzellen-Funksystem, bei dem eine Vielzahl von Basisstationen (2-5) miteinander vernetzt sind, ein mobiles Endgerät (7) aktiv nach einer günstig gelegenen, benachbarten Basisstation (2-5) sucht, auf die es möglicherweise wechseln kann. Bei diesem sogenannten 'Handover' oder auch 'Roaming' muss das Endgerät (1) zunächst die Feldstärken der benachbarten empfangbaren Basisstationen (2-5) messen und dann entscheiden, ob und auf welche der benachbarten Basisstationen (2-5) es wechseln kann. Dieses kann relativ lang dauern und belastet die Stromquelle des Endgerätes (7). Erfindungsgemäß wird daher vorgeschlagen, dass die Basisstationen (2-5) Daten über die Topologie von benachbarten Basisstationen (2-5) messen und in einer Tabelle (8) ablegen. Diese Tabelle (8) wird vorzugsweise von einer Steuereinheit (1) initiiert und an das mobile Endgerät (7) übertragen. Dadurch erspart das mobile Endgerät (7) vorteilhaft das zeitaufwendige Einmessen der Feldstärke sowie die dafür erforderliche Energie.

## Beschreibung

Die Erfindung geht aus von einem Verfahren zum Einmessen eines Funkfeldes bei einem Mehrzellen-Funksystem, wobei wenigstens zwei Basisstationen in einem räumlich vorgegebenen Abstand zueinander angeordnet sind, wobei sich deren Funkfelder wenigstens teilweise überschneiden und von einem mobilen Endgerät empfangen werden, beziehungsweise von einer Steuereinheit nach der Gattung der nebengeordneten Ansprüche 1, 11, 14 und 16. Bei bekannten Mehrzellen-Funksystemen, die beispielsweise nach dem DECT- (Digital Enhanced Cordless Telecommunication), Bluetooth- Standard oder dergleichen aufgebaut sind, wird die Topologie des Mehrzellen-Funksystems - die Lage und Anordnung der einzelnen Basisstationen - nicht automatisch eingemessen. Vielmehr muss ein einzelnes mobiles Endgerät, das sich in einem Telekommunikationsnetz befindet, aktiv nach einer geeigneten, benachbarten Basisstation suchen, auf die es beispielsweise beim sogenannten ,Handover', d.h. beim Wechseln der Funkzelle während einer aktiven Verbindung, umschalten kann. Das gleiche Problem besteht auch beim sogenannten ,Roaming', d.h. beim Wechsel der Funkzelle ohne aktive Verbindung.

Beim Handover oder auch beim Roaming muss das mobile Endgerät zunächst die Feldstärken der empfangbaren benachbarten Basisstationen messen und bewerten. Erst danach kann es entscheiden, ob und gegebenenfalls zu welcher Basisstation es wechseln muss. Der Zeitaufwand für die Messung und Auswertung jedes einzelnen empfangenen Funksignals ist abhängig vom verwendeten Funkstandard und kann relativ zeitaufwendig sein.

Das erfindungsgemäße Verfahren zum Einmessen eines Funkfeldes bei einem Mehrzellen-Funksystem beziehungsweise die Steuereinheit mit den kennzeichnenden Merkmalen der nebengeordneten Ansprüche 1, 11, 14 und 16 hat demgegenüber den Vorteil, dass das mobile Endgerät die bestehende Topologie des Mehrzellen-Funksystems selbst nicht einmessen muss. Vielmehr kann es die Daten mit der relevanten Topologie der benachbarten Basisstationen einer Tabelle entnehmen, die das mobile Endgerät in seinem Speicher gespeichert hat oder von der aktuellen Basisstation übermittelt bekommt. Dadurch wird nicht nur die durch das Einmessen erforderliche Zeit in vorteilhafter Weise eingespart. Als Vorteil ergibt sich, dass die für die Feldstärkenmessung der benachbarten Basisstationen erforderliche Energie nicht mehr aufgebracht werden muss, so dass das mobile Endgerät mit einer Batterieladung länger betriebsbereit bleibt.

Durch die in den abhängigen Ansprüchen aufgeführten Maßnahmen sind vorteilhafte Weiterbildungen und Verbesserungen des in den nebengeordneten Ansprüchen 1 und 11 aufgeführten Verfahrens beziehungsweise der Steuereinheit gegeben. Als besonders vorteilhaft wird dabei angesehen, dass die Tabelle als Nachbarzellenliste ausgebildet ist und die wesentlichen Daten der benachbarten Basisstationen, wie deren relativen Feldstärken der einzelnen Basisstationen untereinander, enthält. Mit diesen Daten kann beispielsweise die relative Position der benachbarten Basisstationen geschätzt werden.

Vorteilhaft ist auch, in der Tabelle weitere Daten wie die Lastinformation zu speichern. Die Information über die momentane Last einer Basisstation ist deswegen wichtig, weil hieraus die Anzahl der gerade aktiven Verbindungen ersichtlich ist. So kann mit dieser Kennzahl zum Beispiel verhindert werden, dass das mobile Endgerät auf eine überlastete benachbarte Basisstation wechselt.

Als besonders einfache und vorteilhafte Lösung für die Erstellung der Tabelle wird angesehen, dass wechselweise jeweils eine Basisstation als Sender und alle übrigen Basisstationen als Empfänger geschaltet sind. Auf diese Weise können die als Empfänger geschalteten Basisstationen die Funkfeldstärke der gerade sendenden Basisstation messen und abspeichern. Nach zyklischem Tausch zwischen den einzelnen Basisstationen ergibt sich für jede Basisstation eine Verteilung über die einzelnen gemessenen Feldstärken der benachbarten Basisstationen, die in der Liste gespeichert wird.

Wenn die Liste in Form der Nachbarzellenliste erstellt wurde, kann das mobile Endgerät, beispielsweise ein Handy oder dergleichen, die in der Liste gespeicherten Daten nach einem vorgegebenen Algorithmus für einen Verbindungsaufbau verwenden. Natürlich kann auch die zugeordnete Basisstation mit diesen Daten den Verbindungsaufbau zum mobilen Endgerät vorteilhaft steuern.

Bei einer Vielzahl von Basisstationen in einem Mehrzellen-Funksystem ergibt sich die weitere vorteilhafte Lösung, dass jede Basisstation die Daten zu seinen benachbarten Basisstationen gespeichert hat. So ergibt sich eine Gesamttopologie für alle relevanten Basisstationen des Mehrzellen-Funksystems, die an die Steuereinheit und/oder das mobile Endgerät übertragen wird.

Als weiterer Vorteil wird auch angesehen, dass die Tabelle für die Planung von Funkfeldern verwendet werden kann. Damit können beispielsweise Funkabschattungen, starke unerwünschte Überschneidungen oder sonstige Fehler im Funknetz leicht aufgedeckt werden.

Die Dauer des Einmessens ist abhängig von dem verwendeten Funkstandard und kann bei mehreren Sekunden liegen. Das Einmessen des gesamten Systems kann somit mehrere Minuten in Anspruch nehmen. Daher wird das vollständige Einmessen des Funkfeldes die Ausnahme sein und nur durchgeführt werden, wenn beispielsweise das Mehrzellen-Funksystem in Betrieb genommen wird oder eine neue Basisstation hinzukommt.

Bei einer alternativen Ausgestaltung der Erfindung ist auch vorgesehen, die Tabelle zu vorgegebenen Zeiten automatisch zu erneuern. Dies könnte beispielsweise in betriebsschwachen Zeiten wie nachts, an Feiertagen oder dergleichen sein.

Die Anwendung des Verfahrens eignet sich insbesondere bei Funknetzen, die nach dem DECT-, Bluetooth-Standard oder ähnlichen Standards bzw. Netzen arbeiten.

Die Steuerung der einzelnen Basisstationen durch eine gemeinsame Steuereinheit hat den Vorteil, dass die einzelnen Sendeund Empfangsphasen der Basisstationen zeitlich kontrolliert ablaufen. Des weiteren können dabei die gewonnenen Daten an die Steuereinheit übertragen und hier zu einer Gesamttabelle zusammengefasst werden.

Eine weitere günstige Lösung für die Steuereinheit wird auch darin gesehen, dass nicht nur die Feldstärken der benachbarten Basisstationen, sondern auch weitere Daten wie zum Beispiel die Lastinformationen in der Tabelle gespeichert werden. Dadurch kann beispielsweise trotz guter Empfangseigenschaften eine Überlastung der in Frage kommenden Basisstation erkannt und gegebenenfalls vermieden werden.

Die Steuereinheit ist in alternativer Ausgestaltung der Erfindung in einer vorhandenen Mehrzellen-Funksystem-Steuerung integriert. Dadurch können die verschiedenen Funktionen, wie beispielsweise das Umschalten vom Sende- auf den Empfangsbetrieb, vorteilhaft auf einander abgestimmt und die Installation vereinfacht werden.

Der Erfindung liegt die Aufgabe zugrunde, bei einem Mehrzellen-Funksystem das Einmessen des Funkfeldes zu vereinfachen. Diese Aufgabe wird mit den Merkmalen der nebengeordneten Ansprüche 1 und 11 gelöst.

Ein Ausführungsbeispiel der Erfindung ist in der Zeichnung dargestellt und wird in der nachfolgenden Beschreibung näher erläutert.
Figur 1 zeigt ein Mehrzellen-Funksystem in schematischer Darstellung und
Figur 2 zeigt eine Tabelle mit einer Nachbarzellenliste der Basisstation 2.

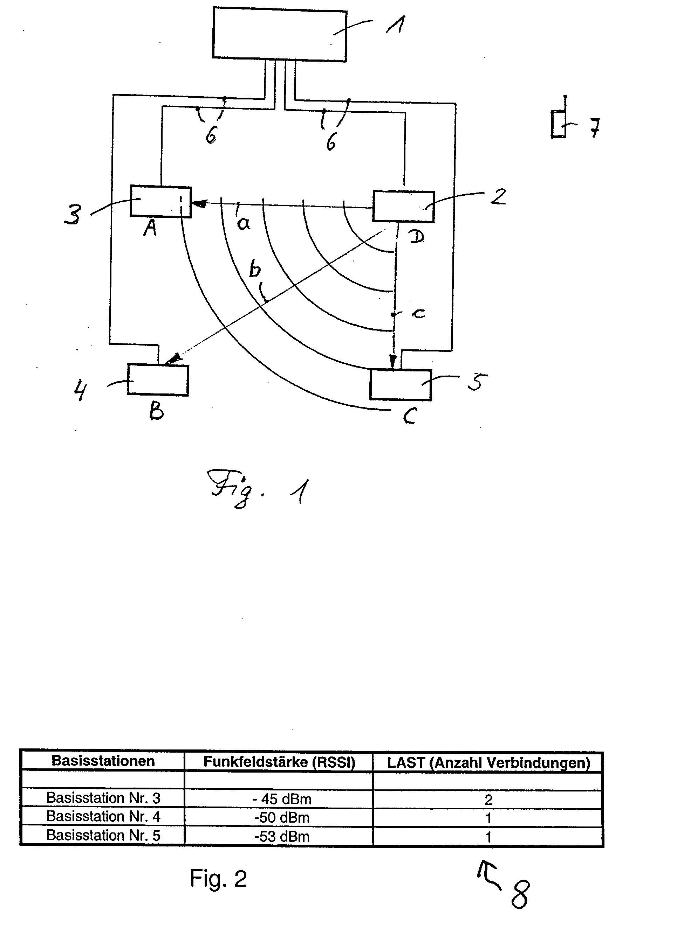

Die schematische Darstellung der Figur 1 zeigt ein Mehrzellen-Funksystem. Es weist beispielsweise vier Basisstationen 2 bis 5 auf, die vorzugsweise über elektrische Verbindungsleitungen 6 mit einer zentralen Steuereinheit 1 verbunden sind. Die zentrale Steuereinheit 1 steuert im wesentlichen den Sende- und Empfangsbetrieb der einzelnen Basisstationen 2 bis 5 nach einem vorgegebenen Algorithmus, die Messung der Feldstärken, das Anlegen einer Tabelle mit einer Nachbarschaftsliste und die Übertragung der Daten zu den einzelnen Teilnehmern. Die zentrale Steuereinheit 1 kann als separate Einheit an einem geeigneten Ort aufgestellt sein. In alternativer Ausgestaltung der Erfindung ist auch vorgesehen, die zentrale Steuereinheit 1 in eine Mehrzellen-Funksystem-Steuerung zu integrieren, die ohnehin in dem Telekommunikationssystem vorhanden ist. Dadurch lässt sich beispielsweise die Installation der Telekommunikationsanlage vereinfachen.

Die Basisstationen 2 bis 5 sind räumlich verteilt in einem Raum oder in einem Gelände mit den Standorten A, B, C und D angeordnet. Die Basisstation 2 weist in diesem Ausführungsbeispiel zu ihren benachbarten Basisstationen 3 bis 5 die Abstände a, b bzw. c auf. Entsprechend der Abstände a, b bzw. c empfangen die Basisstationen 3 bis 5 unterschiedliche Werte für die Funkfeldstärke (RSSI, Receiver Signal Strength Indicator) der sendenden Basisstation 2.

Die Basisstationen 2 bis 5 sind beispielsweise zu einer Telekommunikationsanlage zusammengeschaltet und arbeiten nach einem der bekannten Standards wie dem DECT-, Bluetooth-Standard oder dergleichen. Diese Standards sind per se bekannt und müssen daher nicht näher erläutert werden.

Die einzelnen Basisstationen 2 bis 5 werden vorzugsweise so aufgestellt, dass sich ihre Funkfelder wenigstens teilweise überschneiden. Dadurch ist gewährleistet, dass ein mobiles Endgerät 7, das beispielsweise ein Funkempfänger wie ein Handy, ein Datenempfänger oder ein ähnliches Gerät sein kann, stets mit einer der Basisstationen 2 bis 5 über das Funknetz in Verbindung steht, wenn es sich in dem betreffenden Gebiet stationär befindet oder in dem Gelände bewegt.

Wegen der begrenzten Reichweiten der Sender sowohl im mobilen Endgerät 7 als auch in den Basisstationen 2 bis 5 muss eine aktive oder auch eine passive Verbindung (Handover bzw. Roaming) beim Wechsel einer Funkzelle (Basisstation) zu der entsprechenden neuen Basisstation 2 bis 5 weitergeschaltet werden.

Bei der Auswahl einer geeigneten Basisstation 2 bis 5 musste diese Aufgabe bisher das mobile Endgerät 7 übernehmen und zunächst die Topologie, d. h. insbesondere die Funkfeldstärken der empfangbaren Basisstationen 2 bis 5 messen und dann auf Grund der ausgewerteten Daten entscheiden, zu welcher Basisstation 2 bis 5 es wechseln muss. Hinzu kommt, dass dieser Vorgang - abhängig vom benutzten Standard - relativ zeitaufwendig ist.

Beim Hochfahren oder auch, wenn zum Beispiel eine neue Basisstation in das Mehrzellen-Funksystem eingefügt werden soll, muss das Funkfeld neu eingemessen werden. Des weiteren gibt die Einmessung des Funkfeldes bei der Planung eines neuen Mehrzellen-Funksystems Hinweise über mögliche Fehlerquellen, die sonst nur schwer aufgespürt werden könnten.

Im Nachfolgenden wird die Funktionsweise des erfindungsgemäßen Verfahrens zum Einmessen eines Funkfeldes bei einem Mehrzellen-Funksystem, beispielsweise bei einem DECT-System, näher erläutert. Durch das Einmessen wird die vorhandene Topologie erfasst. Dabei werden die einzelnen Feldstärken gemessen und in Bezug auf die jeweilige sendende Basisstation 2 bis 5 ausgewertet. Zusätzlich können auch weitere Parameter wie die Lastinformation oder dergleichen berücksichtigt werden. Die ermittelten Werte werden vorzugsweise in Form einer Tabelle 8, wie sie später noch zu Figur 2 näher erläutert wird, aufgelistet. Diese Tabelle 8 wird an die zentrale Steuereinheit 1, die Basisstationen 2 bis 5 und/oder das mobile Endgerät 7 übertragen.

Wie zuvor erwähnt wurde, wird erfindungsgemäß die Einmessung des Funkfeldes mit Hilfe der zentralen Steuereinheit 1 gesteuert. Beispielsweise beim Systemstart, d.h. beim Hochfahren des Mehrzellen-Funksystems fordert zunächst die zentrale Steuereinheit 1 alle angeschlossenen Basisstationen 2 bis 5 auf, nach ihren Nachbarstationen zu suchen. Dazu wird eine Basisstation, in Figur 1 zunächst die Basisstation 2, in ihren Sendebetrieb geschaltet. Die Basisstation 2 sendet vorzugsweise mit ihrer vollen Sendeleistung. Alle übrigen Basisstationen, hier die Basisstationen 3 bis 5, werden in einen geeigneten Empfangsmodus geschaltet.

Alle Basisstationen 3 bis 5, die die Signale der sendenden Basisstation 2 empfangen, speichern zunächst diese Information. In Abhängigkeit vom verwendeten Funkstandard können die se Basisstationen 3 bis 5 eine entsprechende Meldung an die zentrale Steuereinheit 1 senden (direkte Meldung). Alternativ kann auch eine indirekte Meldung an die zentrale Steuereinheit 1 geschickt werden. Das bedeutet, dass die empfangenen Basisstationen 3 bis 5 die Meldung an die sendende Basisstation 2 schicken und diese die Antwort an die zentrale Steuereinheit 1 weiterleitet.

Die Sende- und Empfangsbetriebszustände unterscheiden sich bei den einzelnen Funkstandards. Die Antwort-Meldung muss dann entsprechend angepasst werden.

In der Antwort-Meldung an die zentrale Steuereinheit 1 wird vorzugsweise der Wert für die empfangene Funkfeldstärke als RSSI-Wert angegeben, mit dem die sendende Basisstation 2 empfangen wurde. Beim späteren Betrieb können auch weitere Parameter, wie der Lastfaktor, Betriebsstörungen oder dergleichen in der Antwort-Meldung enthalten sein.

Nachdem für die Basisstation 2 die Topologiewerte erfasst sind, schaltet die zentrale Steuereinheit 1 nun die nächste Basisstation, beispielsweise die Basisstation 3 auf einen Sendebetrieb und die Basisstationen 2, 4 und 5 auf Empfang. Dieser Zyklus wiederholt sich, bis alle Funkfeldstärken sowie deren relevanten Parameter von allen Basisstationen 2 bis 5 erfasst sind.

Die Dauer des Einmessens des Funkfeldes einer Basisstation kann je nach verwendetem Funkstandard bei mehreren Sekunden liegen. Das Einmessen des gesamten Systems kann somit mehrere Minuten in Anspruch nehmen. Daher ist das vollständige Einmessen des Funkfeldes eines Mehrzellen-Funksystems eher ein Ausnahmezustand, der nur bei wichtigen Gegebenheiten wie bei einem Systemstart, beim Fehler- oder Servicefall oder bei Änderungen der Betriebseigenschaften des Mehrzellen-Funksystems durchgeführt werden sollte.

Beim Einmessen des Funkfeldes ist es sinnvoll, dass sich die Funkfelder der Basisstationen 2 bis 5 bei maximaler Sendeleistung so überschneiden, dass jeweils die benachbarten Basisstationen 2 bis 5 noch empfangen werden können.

Nachdem zu jeder einzelnen Basisstation 2 bis 5 alle in Reichweite befindlichen benachbarten Basisstationen 2 bis 5 mit ihren zugehörigen Feldstärke-Messwerten ermittelt wurden, erstellt die zentrale Steuereinheit 1 für jede Basisstation 2 bis 5 eine Tabelle 8, wie sie gemäß Figur 2 nachfolgend erläutert wird. Figur 2 zeigt eine mögliche Tabelle 8 für die Basisstation 2. Für die anderen benachbarten Basisstationen 3-5 ist die Tabelle 8 entsprechend modifiziert.

Die Tabelle 8 ist als Nachbarschaftsliste ausgebildet und enthält beispielsweise für die Basisstation 2 in ihrer ersten Spalte die Namen der Basisstationen 3 bis 5. In der zweiten Spalte sind die RSSI-Werte für die Funkfeldstärke eingetragen. Ein niedriger RSSI-Wert bedeutet dabei, dass die Basisstation weiter entfernt ist als bei einem größeren RSSI-Wert. Die RSSI Werte geben somit die relativen Abstände der einzelnen Basisstationen 2 bis 5 an, nicht deren absoluten Standorte.

In der dritten Spalte sind Lastinformationen eingetragen, die der Anzahl der momentanen Verbindungen entsprechen. Diese Zahlen ändern sich ständig und werden von der zentralen Steuereinheit 1 während des laufenden Betriebes entsprechend häufig aktualisiert. Natürlich können auch weitere Parameter in weiteren Spalten der Tabelle 8 gespeichert werden.

Die Tabellenwerte werden vorzugsweise nach der Funkfeldstärke und/oder der Lastinformation sortiert. Die Sortierung erfolgt nach einem vorgegebenen Algorithmus beispielsweise in der Weise, dass die geeignetste Basisstation 2 bis 5 an oberster Stelle steht. Beim Handover oder Roaming kann dann auf diese Basisstation zuerst umgeschaltet werden.

Nach Erstellung der Tabelle 8 und Übermittlung an die Basisstationen 2 bis 5 kann das Mehrzellen-Funksystem seinen Betrieb aufnehmen. Während der Betriebsphase wird die Tabelle 8 bei Bedarf an das mobile Endgerät 7 übertragen.

Wie erwähnt, erhält das mobile Endgerät 7 von der zentralen Steuereinheit 1 die fertige Tabelle 8 übermittelt und kann dann entsprechend der Tabelle 8 durch einen intelligenten Auswahl-Algorithmus auf die geeignetste Basisstation umschalten. Ein eigenes Einmessen des Funkfeldes ist nicht mehr erforderlich.

Eine Aktualisierung der Messung des Funkfeldes kann regelmäßig (automatisch) zu betriebsschwachen Zeiten oder unter bestimmten, vorherrschenden Bedingungen durchgeführt werden. Beispielsweise bei Installation einer zusätzlichen Basisstation muss nicht das ganze Mehrzellen-Funksystem neu eingemessen werden. Es genügt, wenn die neue Basisstation in den Sendebetrieb geht und alle anderen Basisstationen auf Empfang geschaltet sind. Voraussetzung ist dabei, dass alle Basisstationen für den Betrieb mit Endgeräten 7 betriebsbereit bleiben.

Nachdem alle benachbarten Basisstationen in Reichweite geantwortet haben, erstellt die zentrale Steuereinheit 1 für die neu hinzugekommene Basisstation eine Nachbarzellenliste. In der bestehenden Nachbarzellenliste der bereits vorhandenen Basisstationen wird die neue Basisstation zusätzlich mit den gemessenen RSSI-Werten aufgeführt. Diese jeweils aktualisierte Tabelle 8 wird dann allen anderen Basisstationen übermittelt.

### Bezugszeichenliste

- 1: zentrale Steuereinheit
- 2: (sendende) Basisstation
- 3-5: Basisstationen / Empfangsstationen
- 6: Verbindungsleitung
- 7: mobiles Endgerät
- 8: Tabelle
- a,b,c: Abstand
- A,B,C,D: Standorte

## Patentansprüche

1. Verfahren zum Einmessen eines Funkfeldes bei einem Mehrzellen-Funksystem, wobei wenigstens zwei Basisstationen (2-5) in einem räumlich vorgegebenen Abstand (a,b,c) zueinander angeordnet und über Verbindungsleitungen (6) mit einer Steuereinheit (1) verbunden sind, und wobei sich die Funkfelder der einzelnen Basisstationen (2-5) wenigstens teilweise überschneiden und von einem mobilen Endgerät (7) empfangbar sind,
**dadurch gekennzeichnet,**
**dass** für jede Basisstation (2-5) eine Tabelle (8) mit benachbarten Basisstationen (2-5) und ihnen zugeordneten Parametern erzeugt wird, wobei der Inhalt der Tabelle einer Basisstation (2), der einer benachbarten Basisstation (3-5) zugeordnet ist, mit Hilfe der folgenden Verfahrensschritte erzeugt wird:
a) Aktivieren der Empfangsbereitschaft der entsprechenden Basisstation (2);
b) Senden eines definierten Signals durch die benachbarte Basisstation (3-5),
c) Empfangen des Signals durch die entsprechende Basisstation (2);
d) Ermitteln wenigstens eines vorgegebenen Parameters des empfangenen Signals durch die entsprechende Basisstation (2);
e) Eintragen des ermittelten Parameters der benachbarten Basisstation (3-5) in die Tabelle der entsprechenden Basisstation (2).

2. Verfahren nach Anspruch 1, **dadurch gekennzeichnet, dass** in der Tabelle (8) einer Basisstation (2) Daten über die Feldstärke der Sendefelder ihrer benachbarten Basisstationen (3-5) eingetragen werden.

3. Verfahren nach einem der vorhergehenden Ansprüche, **dadurch gekennzeichnet,**
**dass** in der Tabelle (8) einer Basisstation (2) Daten über Lastinformationen ihrer benachbarten Basisstationen (3-5) eingetragen werden.

4. Verfahren nach einem der vorhergehenden Ansprüche,
**dadurch gekennzeichnet,**
**dass** die Tabelle (8) dadurch erstellt wird, dass wechselweise jeweils eine Basisstation (2) als Sender und alle übrigen Basisstationen (3-5) als Empfänger geschaltet sind, und dass die auf Empfang geschalteten Basisstationen (3-5) die Sendefeldstärke der sendenden Basisstation (2) messen.

5. Verfahren nach einem der vorhergehenden Ansprüche, **dadurch gekennzeichnet,**
**dass** das mobile Endgerät (7) und/oder eine Basisstation (2-5) die Daten der Tabelle (8) nach einem vorgegebenen Algorithmus für einen Verbindungsaufbau, Handover und/oder Roaming verwendet.

6. Verfahren nach einem der vorhergehenden Ansprüche, **dadurch gekennzeichnet,**
**dass** jede Basisstation (2-5) eine Tabelle (8) erstellt, in der relevante Daten von benachbarten Basisstationen (2-5) gespeichert sind, und dass diese Tabellen (8) an die Steuereinheit (1) und/oder das mobile Endgerät (7) übertragen werden.

7. Verfahren nach einem der vorhergehenden Ansprüche, **dadurch gekennzeichnet,**
**dass** die Tabelle (8) für die Planung eines Funkfeldes verwendet wird.

8. Verfahren nach einem der vorhergehenden Ansprüche, **dadurch gekennzeichnet,**
**dass** die Tabelle (8) unter Berücksichtigung vorgegebener Bedingungen, beispielsweise bei Änderung der angeschlossenen Basisstationen (2-5) erneuert wird.

9. Verfahren nach einem der vorhergehenden Ansprüche, **dadurch gekennzeichnet,**
**dass** die Tabelle (8) zu vorgegebenen Zeiten automatisch erneuert wird.

10. Verfahren nach einem der vorhergehenden Ansprüche, **gekennzeichnet durch** eine Verwendung bei einem Mehrzellen-Funksystem, das beispielsweise nach dem DECT-, Bluetooth-Standard usw. arbeitet.

11. Steuereinheit zur Durchführung des Verfahrens nach einem der vorhergehenden Ansprüche, wobei die Steuereinheit (1) für Steuerzwecke vorzugsweise über Verbindungsleitungen (6) mit wenigstens zwei Basisstationen (2-5) verbunden ist,
**dadurch gekennzeichnet,**
**dass** die Steuereinheit (1) ausgebildet ist, sukzessive eine der Basisstationen (2) auf Senden zu schalten und die übrigen Basisstationen (3-5) auf Empfang zu schalten,
**dass** die Empfangsstationen (3-5) ausgebildet sind, die Feldstärke der sendenden Basisstation (2) zu messen, und dass die Empfangsstationen (3-5) ausgebildet sind, die gemessene Feldstärke der sendenden Basisstation (2) in einer Tabelle (8) zu speichern.

12. Steuereinheit nach Anspruch 10, **dadurch gekennzeichnet, dass** die Steuereinheit (1) ausgebildet ist, die Empfangsstationen (3-5) so zu steuern, dass sie weitere Daten der sendenden Basisstation (2), vorzugsweise die Lastinformation in der Tabelle (8) speichern.

13. Steuereinheit nach einem der Ansprüche 11 und 12, **dadurch gekennzeichnet,**
**dass** die Steuereinheit (1) in eine zentrale Mehrzellen-Funksystem-Steuerung eines Telekommunikationssystems integriert ist.

14. Basisstation eines Mehrzellen-Funksystems, wobei die Basisstation (2) in einem räumlich vorgegebenen Abstand (a,b,c) zu wenigstens einer benachbarten Basisstation (3-5) angeordnet ist, und wobei sich die Funkfelder der Basisstationen (2-5) wenigstens teilweise überschneiden und von einem mobilen Endgerät (7) empfangbar sind,
**dadurch gekennzeichnet,**
**dass** die Basisstation (2) ausgebildet ist, um Parameter jeder benachbarten Basisstation (3-5) anhand empfangener Signale der jeweiligen benachbarten Basisstation (3-5) zu ermitteln und der jeweiligen benachbarten Basisstation (3-5) zugeordnet in einer Tabelle (8) abzuspeichern.

15. Basisstation nach Anspruch 14, **dadurch gekennzeichnet, dass** die in der Tabelle gespeicherten Parameter der benachbarten Basisstationen (3-5) die Feldstärke ihrer Sendefelder und/oder ihre Lastinformationen umfassen.

16. Mehrzellen-Funksystem, mit einer Steuereinheit (1) und wenigstens zwei Basisstationen (2-5), die in einem räumlich vorgegebenen Abstand (a,b,c) zueinander angeordnet und über Verbindungsleitungen (6) mit der Steuereinheit (1) verbunden sind, wobei sich die Funkfelder der einzelnen Basisstationen (2-5) wenigstens teilweise überschneiden und von einem mobilen Endgerät (7) empfangbar sind,
**dadurch gekennzeichnet,**
**dass** die Steuereinheit (1) ausgebildet ist, um wechselweise eine der Basisstationen (2) auf Empfang und die restlichen Basisstationen (3-5) auf Senden zu schalten, und
**dass** die Basisstationen (2) ausgebildet sind, um Parameter einer sendenden benachbarten Basisstation (3-5) anhand empfangener Signale der jeweiligen benachbarten Basisstation (3-5) zu ermitteln und der jeweiligen benachbarten Basisstation (3-5) zugeordnet in einer Tabelle (8) abzuspeichern.
